# FASCICULE DE BREVET EUROPEEN

(11) **EP 1 817 713 B1**
(45) Date de publication et mention de la délivrance du brevet: **07.05.2008**
(21) Numéro de dépôt: 05818162.9
(22) Date de dépôt: 22.11.2005
(51) Int. Cl.: G06F 21/00

(54) **PROCEDE D'IDENTIFICATION D'UN UTILISATEUR AU MOYEN DE CARACTERISTIQUES BIOMETRIQUES MODIFIEES ET BASE DE DONNEES POUR LA MISE EN OEUVRE DE CE PROCEDE**
VERFAHREN ZUR BENUTZERIDENTIFIZIERUNG MITTELS VERÄNDERTER BIOMETRISCHER EIGENSCHAFTEN UND DATENBANK ZUR AUSFÜHRUNG DIESES VERFAHRENS
METHOD FOR IDENTIFYING A USER BY MEANS OF MODIFIED BIOMETRIC CHARACTERISTICS AND A DATABASE FOR CARRYING OUT SAID METHOD

(30) Priorité: 29.11.2004 FR 0412618
(43) Date de publication de la demande: 15.08.2007
(73) Titulaire: SAGEM Sécurité, 75015 Paris (FR)
(72) Inventeur: CHABANNE, Hervé, F-78200 MANTES-LA-JOLIE (FR); RIEUL, François, F-78100 SAINT-GERMAIN EN LAYE (FR); DIDIER, Bernard, F-77870 VULAINES SUR SEINE (FR)
(74) Mandataire: Lavialle, Bruno François Stéphane
(86) Numéro de dépôt international: PCT/FR2005/002894
(87) Numéro de publication internationale: WO 2006/056683

(56) Documents cités:
- EP-A- 1 126 419
- US-A- 4 972 476
- US-A1- 2003 156 011
- BOLLE R M ET AL: "Biometric perils and patches" PATTERN RECOGNITION, ELSEVIER, KIDLINGTON, GB, vol. 35, no. 12, décembre 2002 (2002-12), pages 2727-2738, XP004379643 ISSN: 0031-3203

## Description

La présente invention concerne un procédé d'identification d'un utilisateur au moyen d'une caractéristique biométrique modifiée, et une base de données pour la mise en oeuvre de ce procédé. Par caractéristique biométrique, on entend désigner ici un ensemble de points caractéristiques, notamment d'une empreinte digitale, d'un iris ou d'un visage, qui est propre à chaque individu et qui permet de distinguer cet individu d'autres individus.

Un tel procédé est utilisable par exemple pour vérifier l'identité d'un utilisateur ou pour autoriser l'accès de celui-ci à un lieu, à des informations particulières ou à un service informatique.

Il est connu un procédé d'identification mis en oeuvre au moyen d'une base de données mettant en relation une caractéristique biométrique de chaque utilisateur avec des données personnelles de l'utilisateur. Un fraudeur qui accéderait à la base de données aurait alors accès à toutes les informations qui lui sont nécessaires pour usurper l'identité d'un utilisateur autorisé. La correspondance entre les caractéristiques biométriques et les données personnelles est en outre contraire à la confidentialité normalement attachée à la réalisation d'une base de données contenant une identification de tous les utilisateurs d'un service ou d'une application.

Il est par ailleurs connu du document EP-A-1 126 419 un procédé d'authentification mis en oeuvre au moyen d'une mémoire, qui permet d'éviter qu'un tiers qui aurait accès à cette mémoire ne puisse utiliser les informations qu'elle contient pour fausser l'authentification. La mémoire contient une caractéristique biométrique modifiée obtenue en réalisant une combinaison de modifications identifiées par des codes sur une empreinte digitale de l'utilisateur, ces modifications étant par exemple des transformations géométriques associées à l'ajout de leurres. La combinaison de ces codes forme le code d'authentification. Le procédé comprend les étapes de lire sur l'utilisateur l'empreinte digitale et d'opérer sur celle-ci les modifications possibles en comparant après chaque modification ou combinaison de modifications la caractéristique biométrique modifiée ainsi obtenue et la caractéristique biométrique modifiée qui est mémorisée. La coïncidence des caractéristiques biométriques modifiée obtenue et mémorisée permet de déduire le code de la combinaison de modifications réalisées, code qui constitue le code d'authentification. Ainsi, le simple accès à la mémoire ne permet pas au fraudeur de découvrir l'empreinte digitale de l'utilisateur, ni le code d'authentification correspondant.

Un tel procédé est difficilement transposable à l'identification d'utilisateurs au moyen d'une base de données contenant les caractéristiques biométriques et les données personnelles de plusieurs utilisateurs. En effet, cela supposerait de réaliser sur l'empreinte digitale de l'utilisateur les modifications possibles et de comparer le résultat obtenu à chacune des caractéristiques biométriques transformées modifiées dans la base de données. Il en résulterait une opération particulièrement longue et gourmande en ressources informatiques. A moins de disposer de ressources informatiques particulièrement importantes, le procédé est donc d'autant moins exploitable avec une base de données que le nombre d'utilisateurs référencés dans cette base de données est grand.

Il serait donc intéressant de disposer d'un procédé ne présentant pas les inconvénients des procédés précités.

A cet effet, on prévoit, selon l'invention, un procédé d'identification d'un utilisateur mis en oeuvre au moyen d'une base de données personnelles d'utilisateurs, contenant pour chaque utilisateur au moins une première caractéristique biométrique non modifiée, au moins une deuxième caractéristique biométrique modifiée au moyen d'au moins une modification et accessible à partir de la première caractéristique biométrique non modifiée, et au moins une donnée d'identification accessible à partir d'un code identifiant la modification réalisée sur la deuxième caractéristique biométrique. Le procédé comprend les étapes de :
- lire sur l'utilisateur une première caractéristique biométrique et la comparer aux premières caractéristiques biométriques non modifiées de la base de données pour identifier la première caractéristique biométrique non modifiée correspondant à l'utilisateur,
- lire sur l'utilisateur une deuxième caractéristique biométrique et la comparer à la deuxième caractéristique biométrique modifiée correspondant à la première caractéristique biométrique non modifiée de l'utilisateur pour déterminer la modifiée réalisée et en déduire le code identifiant cette dernière,
- extraire la donnée d'identification au moyen du code ainsi déduit.

Ainsi, la première caractéristique biométrique permet par un examen rapide, d'une part, de déterminer si l'utilisateur est référencé dans la base de données et, d'autre part, de trouver la deuxième caractéristique biométrique modifiée qui est mémorisée dans la base de données et qui correspond à l'utilisateur. La deuxième caractéristique biométrique lue sur l'utilisateur permet de retrouver la modification réalisée sur la deuxième caractéristique biométrique modifiée et de déduire le code identifiant cette modification. A partir de ce code, il est possible d'accéder à la donnée personnelle de l'utilisateur. De la sorte, un tiers qui accéderait à la base de données ne pourrait pas établir un lien entre les caractéristiques biométriques et les données personnelles des utilisateurs.

L'invention a également pour objet une base de données personnelles d'utilisateurs pour la mise en oeuvre du procédé ci-dessus. La base de données contient pour chaque utilisateur au moins une première caractéristique biométrique non modifiée, au moins une deuxième caractéristique biométrique modifiée au moyen d'au moins une modification et accessible à partir de la première caractéristique biométrique non modifiée, et au moins une donnée d'identification accessible à partir d'un code identifiant la modification réalisée sur la deuxième caractéristique biométrique.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels
- la figure 1 est une vue schématique de l'organisation d'une base de données conformément à l'invention,
- les figures 2 et 3 montrent des étapes de modification de caractéristiques biométriques,
- la figure 4 est un diagramme par blocs illustrant le procédé d'identification conforme à l'invention.

En référence aux figures, le procédé d'identification conforme à l'invention est mis en oeuvre au moyen d'une base de données personnelle d'utilisateurs, généralement désignée en 1, contenant des données personnelles de n utilisateurs i.

La base de données contient pour chaque utilisateur i une première empreinte non modifiée E_{1,i}, une deuxième empreinte modifiée E'_{2,i} et des données d'identification D.

La première caractéristique biométrique non modifiée E_{1,i} regroupe les points caractéristiques d'une première empreinte digitale e_{1,i} de l'utilisateur i telle que l'empreinte digitale de son pouce gauche.

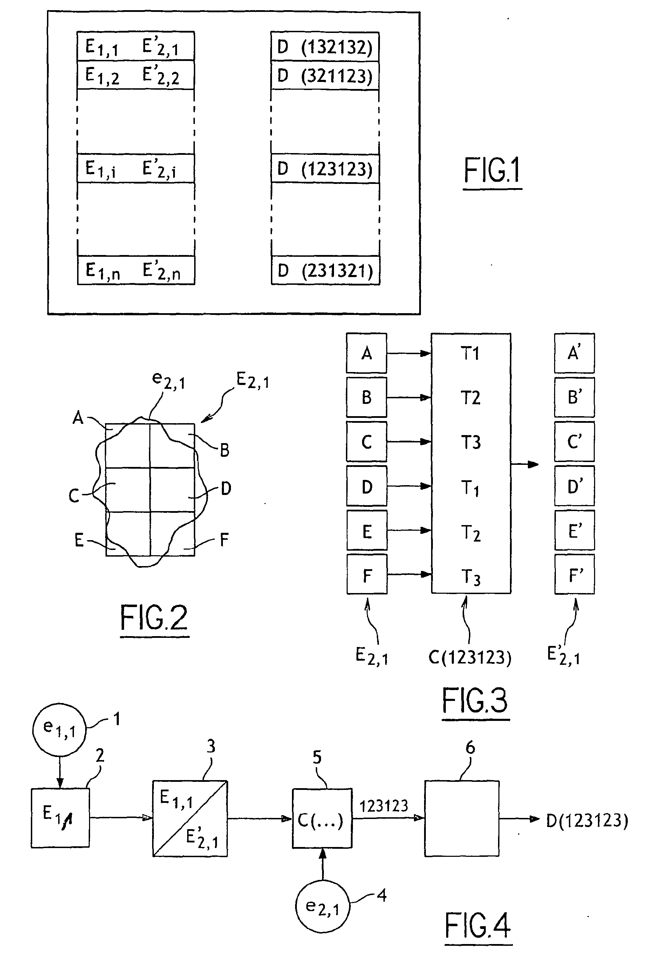

La deuxième caractéristique biométrique modifiée E'_{2,i} est obtenue à partir d'une deuxième caractéristique biométrique non modifiée E_{2,i} (voir la figure 2). La deuxième caractéristique biométrique non modifiée E_{2,i} regroupe les points caractéristiques d'une deuxième empreinte digitale e_{2,i} de l'utilisateur i, telle que l'empreinte digitale de son index gauche. La deuxième caractéristique biométrique non modifiée E_{2,i} est divisée en sous-ensembles A, B, C, D, E, F qui sont soumis à des modifications. Ces modifications sont ici des transformations T1, T2, T3 réalisée de la manière décrite dans le document EP-A-1 126 419. Les transformations sont des transformations géométriques de type translation - permutation, rotation, homotétie... Chaque transformation T1, T2, T3 est identifiée par un code ici respectivement 1, 2, 3.

En prenant comme exemple l'utilisateur 1 (voir la figure 3), le sous-ensemble A est soumis à la transformation T1 pour former le sous-ensemble A', le sous-ensemble B est soumis à la transformation T2 pour former le sous-ensemble B', le sous-ensemble C est soumis à la transformation T3 pour former le sous-ensemble C', le sous-ensemble D est soumis à la transformation T1 pour former le sous-ensemble D', le sous-ensemble E est soumis à la transformation T2 pour former le sous-ensemble E', le sous-ensemble F est soumis à la transformation T3 pour former le sous-ensemble F'. La deuxième caractéristique biométrique modifiée E'_{2,1} résulte donc d'un combinaison des transformations T1, T2, T3 et comprend les sous-ensembles A', B', C', D', E', F'. La combinaison des transformations réalisée pour obtenir la deuxième caractéristique biométrique modifiée E'_{2,1} a donc pour code 1 2 3 1 2 3.

A titre d'exemple, pour l'utilisateur 2, la combinaison des modifications réalisée pour obtenir la deuxième caractéristique biométrique modifiée E'_{2,2} pourrait avoir pour code 2 3 1 2 3 1.

Les données d'identification D comprennent par exemple le nom de l'utilisateur, son état civil, son adresse, les autorisations ou droits dont il dispose...

La base de données 1 est organisée de telle manière que la deuxième caractéristique biométrique modifiée E'_{2,i} est accessible à partir de la première caractéristique biométrique non modifiée E_{1,i}. Un renvoi vers le champ contenant la deuxième caractéristique biométrique modifiée E'_{2,i} peut par exemple être contenu dans le champ contenant la première caractéristique biométrique non modifiée E_{1,i}.

Les données d'identification D de chaque utilisateur i sont accessibles à partir du code identifiant la combinaison de modifications réalisées sur la deuxième caractéristique biométrique modifiée E'_{2,i} correspondant à l'utilisateur i. Le code identifiant la combinaison de modifications est ici une information de localisation des données d'identification D correspondantes dans la base de données.

Le procédé d'identification conforme à l'invention va maintenant être décrit dans le cadre de l'identification de l'utilisateur 1 (voir la figure 4).

Le procédé d'identification débute par l'étape 1 de lire sur l'utilisateur une première empreinte digitale e_{1,i} et d'en extraire la première caractéristique biométrique E_{1,1}. Cette étape de lecture est réalisée de façon classique au moyen d'un détecteur d'empreinte et d'un dispositif de reconnaissance connus en eux-mêmes.

Lors d'une étape 2, la première caractéristique biométrique E_{1,1} de l'utilisateur est comparée aux premières caractéristiques E_{1,i} pour vérifier que l'utilisateur 1 est bien référencé dans la base de données. Lorsque la première caractéristique biométrique E_{1,1} mémorisée est trouvée, la deuxième caractéristique biométrique modifiée E'_{2,1} mémorisée correspondant à la première caractéristique biométrique E_{1,1} mémorisée est également identifiée (étape 3).

Lors d'une étape 4, une deuxième empreinte digitale e_{2,1} est lue sur l'utilisateur et la deuxième caractéristique biométrique E_{2,1} en est extraite.

Les modifications possibles, ici les transformations géométriques T1, T2, T3, sont ensuite systématiquement essayées selon les différentes combinaisons possibles sur la deuxième caractéristique biométrique E_{2,1} et le résultat de ces combinaisons est comparé à la deuxième caractéristique biométrique modifiée E'_{2,1} mémorisée (étape 5). Lorsque le résultat d'une combinaison et la deuxième caractéristique biométrique modifiée E'_{2,1} mémorisée coïncident, le code 1 2 3 1 2 3 correspondant à la combinaison réalisée est déduit et utilisé pour localiser les données d'identification D(1 2 3 1 2 3) correspondant à l'utilisateur 1 qui est alors identifié (étape 6).

Bien entendu, l'invention n'est pas limitée au mode de mise en oeuvre décrit mais englobe toute variante rentrant dans le cadre de l'invention tel que défini par les revendications.

En particulier, l'invention est applicable à d'autres caractéristiques biométriques et notamment à tout ensemble de points caractéristiques, notamment d'une empreinte digitale, d'un iris ou d'un visage, qui est propre à chaque individu et qui permet de distinguer cet individu d'autres individus.

Il est en outre possible de prévoir une modification consistant en l'ajout d'au moins un leurre, aux sous-ensembles A', B', C', D', E', F'. Le leurre est ici le faux sous-ensemble contenant des points caractéristiques imaginaires. Les modifications peuvent consister uniquement en ajout de leurres, sans effectuer de transformations sur les sous-ensembles de départ. Le nombre de transformations peut également être différent de celui décrit.

Bien que les sous-ensembles aient été représentés contigus, les sous-ensembles peuvent se chevaucher.

En variante, les données d'identification D peuvent être mémorisées dans la base de données sous forme chiffrée. Le code identifiant la combinaison de transformations est alors une clé utilisable pour le déchiffrement des données d'identification D : le code servant au déchiffrement des données ou au déchiffrement d'une clé chiffrée destinée au déchiffrement des données.

## Revendications

1. Procédé d'identification d'un utilisateur, **caractérisé en ce que** le procédé est mis en oeuvre au moyen d'une base de données personnelles d'utilisateurs, contenant pour chaque utilisateur au moins une première caractéristique biométrique non modifiée (E_{1,i}), au moins une deuxième caractéristique biométrique modifiée (E_{2,i}) au moyen d'au moins une modification (T) et accessible à partir de la première caractéristique biométrique non modifiée, et au moins une donnée d'identification (D) accessible à partir d'un code identifiant la modification réalisée sur la deuxième caractéristique biométrique, et **en ce que** le procédé comprend les étapes de :
- lire (1) sur l'utilisateur une première caractéristique biométrique (e_{1,i}) et la comparer aux premières caractéristiques biométriques non modifiée de la base de données pour identifier la première caractéristique biométrique non modifiée correspondant à l'utilisateur,
- lire (4) sur l'utilisateur une deuxième caractéristique biométrique (e_{2,i}) et la comparer à la deuxième caractéristique biométrique modifiée correspondant à la première caractéristique biométrique non modifiée de l'utilisateur pour déterminer (5) la modification réalisée et en déduire le code identifiant cette dernière,
- extraire (6) la donnée d'identification au moyen du code ainsi déduit.

2. Procédé selon la revendication 1, **caractérisé en ce que** la deuxième caractéristique biométrique modifiée (E'_{2,i}) a subi une combinaison de modifications (T) et **en ce que** le code d'accès à la donnée d'identification est formé de la combinaison des codes identifiant ces modifications.

3. Base de données personnelles d'utilisateurs, contenant pour chaque utilisateur au moins une première caractéristique biométrique non modifiée (E_{1,i}), au moins une deuxième caractéristique biométrique modifiée (E'_{2,i}) au moyen d'au moins une modification (T) et accessible à partir de la première caractéristique biométrique non modifiée, et au moins une donnée d'identification (D) accessible à partir d'un code identifiant la modification réalisée sur la deuxième caractéristique biométrique.

4. Base de données selon la revendication 3, **caractérisée en ce que** le code forme une information de localisation de la donnée d'identification (D) dans la base de données.

5. Base de données selon la revendication 3, **caractérisée en ce que** la donnée d'identification (D) est chiffrée et **en ce que** le code constitue une clé utilisable pour le déchiffrement de la donnée d'identification.

## Claims

1. A method of identifying a user, the method being **characterized in that** it is implemented by means of a database of the personal data of users, containing for each user at least one unmodified first biometric characteristic (E_{1,i}), at least one second biometric characteristic (E'_{2,i}) that is accessible from the unmodified first biometric characteristic and that has been modified by at least one modification (T), and at least one item of identification data (D) that is accessible from a code identifying the modification that has been implemented on the second biometric characteristic, and **in that** the method comprises the steps of:
· reading (1) from the user a first biometric characteristic (e_{1,i}) and comparing it with the unmodified first biometric characteristics in the database in order to identify the unmodified first biometric characteristic that corresponds to the user;
· reading (4) from the user a second biometric characteristic (e_{2,i}) and comparing it with the modified second biometric characteristic that is accessible from the unmodified first biometric characteristic of the user in order to determine (5) what modification has been implemented and thus deduce the code identifying the modification; and
· extracting (6) the identification data by means of the code as deduced in this way.

2. A method according to claim 1, **characterized in that** the modified second biometric characteristic (E'_{2,i}) has been subjected to a combination of modifications (T), and **in that** the access code to the identification data is constituted by the combination of codes identifying said modifications.

3. A database of the personal data of users, the database containing, for each user, at least one unmodified first biometric characteristic (E_{1,i}), at least one second biometric characteristic (E'_{2,i}) that is accessible from the unmodified first biometric characteristic and that has been modified by means of at least one modification (T), and at least one item of identification data (D) that is accessible from a code identifying the modification that has been performed on the second biometric characteristic.

4. A database according to claim 3, **characterized in that** the code forms information for locating the identification data (D) in the database.

5. A database according to claim 3, **characterized in that** the identification data (D) is encrypted, and **in that** the code constitutes a key suitable for decrypting the identification data.

## Patentansprüche

1. Verfahren zur Benutzeridentifizierung, **dadurch gekennzeichnet, dass** das Verfahren mit Hilfe einer Datenbank mit persönlichen Daten des Benutzers durchgeführt wird, die für jeden Benutzer mindestens ein unmodifiziertes erstes biometrisches Merkmal (E_{1, i}), mindestens ein zweites biometrisches Merkmal (E'_{2, i}), das mit Hilfe mindestens einer Modifizierung (T) modifiziert wurde und auf das von dem unmodifizierten ersten, biometrischen Merkmal aus zugegriffen werden kann, und mindestens ein Identifizierungsdatum (D) enthält, auf das von einem Code aus zugegriffen werden kann, der die an dem zweiten biometrischen Merkmal vorgenommene Modifizierung identifiziert, und dass das Verfahren die Schritte umfasst:
- Lesen (1) eines ersten biometrischen Merkmals (e_{1, i}) am Benutzer und Vergleichen dieses Merkmals mit den unmodifizierten ersten biometrischen Merkmalen der Datenbank, um das dem Benutzer entsprechende unmodifizierte erste biometrische Merkmal zu identifizieren,
- Lesen (4) eines zweiten biometrischen Merkmals (e_{2, i}) am Benutzer und Vergleichen dieses Merkmals mit dem modifizierten zweiten biometrischen Merkmal, das dem unmodifizierten ersten biometrischen Merkmal des Benutzers entspricht, um die vorgenommene Modifizierung zu bestimmen (5) und daraus den Code, der diese letztgenannte identifiziert, herzuleiten,
- Extrahieren (6) des Identifizierungsdatums mit Hilfe des auf diese Weise hergeleiteten Codes.

2. Verfahren nach Anspruch 1, **dadurch gekennzeichnet, dass** das modifizierte zweite biometrische Merkmal (E'_{2, i}) einer Modifizierungskombination (T) unterzogen wurde und dass der Zugriffscode zum Zugriff auf das Identifizierungsdatum aus der Kombination der Codes gebildet ist, die diese Modifizierungen identifizieren.

3. Datenbank mit persönlichen Daten von Benutzern, die für jeden Benutzer mindestens ein unmodifiziertes erstes biometrisches Merkmal (E_{1, i}), mindestens eine zweites biometrisches Merkmal (E'_{2, i}), das mit Hilfe mindestens einer Modifizierung (T) modifiziert wurde und auf das von dem unmodifizierten ersten biometrischen Merkmal aus zugegriffen werden kann, und mindestens ein Identifizierungsdatum (D) enthält, auf das von einem Code aus zugegriffen werden kann, der die an dem zweiten biometrischen Merkmal vorgenommene Modifizierung identifiziert.

4. Datenbank nach Anspruch 3, **dadurch gekennzeichnet, dass** der Code eine Lokalisierungsinformation zur Lokalisierung des Identifizierungsdatums (D) in der Datenbank bildet.

5. Datenbank nach Anspruch 3, **dadurch gekennzeichnet, dass** das Identifizierungsdatum (D) verschlüsselt ist und dass der Code einen Schlüssel bildet, der zum Dechiffrieren des Identifizierungsdatums verwendet werden kann.
